# EUROPEAN PATENT APPLICATION

(11) **EP 1 139 274 A2**
(43) Date of publication of application: **04.10.2001**
(21) Application number: 01302511.9
(22) Date of filing: 19.03.2001
(51) Int. Cl.: G06K 13/08

(54) **Card ejection mechanism-equipped card connector**

(30) Priority: 28.03.2000 JP 2000089126
(71) Applicant: KEL CORPORATION, Tama-shi, Tokyo (JP)
(72) Inventor: Ikemoto, Shinichi, Tama-shi, Tokyo (JP); Mogami, Tomoyuki, Tama-shi, Tokyo (JP)
(74) Representative: Wolff, Francis Paul

(57) **Abstract**

The present invention comprises a housing (10) for holding a card (2) in a receiving space (13); a main unit member (11) comprising contacts (40, 50) for making direct contact with a flat contact disposed on the held card (2); and a cover member (12) mounted in a freely detachable condition to this main unit member (11), and a card ejection mechanism (100) for ejecting a card(2)held in the receiving space (13) is disposed in the cover member (12).

## Description

### FIELD OF THE INVENTION

The present invention relates to a card connector for holding a card in a housing and transmitting information, and more particularly, to a card connector comprising a card ejection mechanism for forcibly ejecting a card held in the housing.

### BACKGROUND OF THE INVENTION

A card connector, in a state, wherein a card is held in a receiving space formed in a housing, carries out the transmission of information by bringing a contact mounted in a housing into direct contact with a card-side contact disposed on a card. There are card connectors such as this comprising a card ejection mechanism for forcibly ejecting a card held in the housing, and removing a card is extremely easy with a card connector of this kind.

However, when an attempt is made to incorporate this mechanism anew in a card connector which does not comprise such a card ejection mechanism, it is necessary to either build a new card connector integrating a card ejection mechanism, or to separately attach a card ejection mechanism housed in a separate housing to an existing card connector. In this case, since the former involves rebuilding the card connector itself, manufacturing costs increase, and even the latter requires that engineering changes be applied to the housing of an existing card connector so as to enable a card ejection mechanism to be separately attached. Thus, the problem is that, in addition to being unable to avoid higher manufacturing costs, the number of component parts greatly increases, and the size becomes larger.

### SUMMARY OF THE INVENTION

An object of the present invention is to enable manufacturing to be performed inexpensively without redesigning the card connector itself, or adding major engineering changes to an existing card connector.

A further object of the present invention is to provide a card ejection mechanism-equipped card connector of a constitution, which also enables an increase in the number of component parts to be lessened, and an increase in size to be minimized.

A card ejection mechanism-equipped card connector according to the present invention is constituted having a housing in which there is formed a receiving space for holding a card; a contact, which is mounted in the housing, and which makes direct contact with a card-side contact (for example, the flat contact in an embodiment) disposed on a card held in the receiving space; and a card ejection mechanism for ejecting a card held in the receiving space, wherein the housing comprises a main unit member in which a contact is mounted, and a cover member, which is mounted in a freely detachable condition to this main unit member, and the card ejection mechanism is disposed in the cover member.

Since the card ejection mechanism, of the card ejection mechanism-equipped card connector, for ejecting a card held in the receiving space of the housing is provided in the cover member, which is mounted in a freely detachable condition to the main unit member of the housing, the existing card connector can be used as-is without carrying out an engineering change to a part other than the cover member (that is, the main part of the card connector) in the existing card connector. As a result, since it is not necessary to redesign the card connector itself, manufacturing costs can be reduced. Further, since it is not a constitution in which a card ejection mechanism is separately attached to an existing card connector, the increase in the number of component parts can also be lessened, and the increase in size can be minimized as well. Further, with a constitution of this kind, various kinds of card ejection mechanism-equipped card connectors can be achieved by replacing only the card ejection mechanism-equipped cover member part.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
Fig. 1 is a perspective view showing the constitution of a card ejection mechanism-equipped card connector according to the present invention, together with a card, which is inserted and mounted in this card connector;
Fig. 2 is a diagram of a card connector seen from below;
Fig. 3 is a plan view of a card connector in a state in which the cover member has been removed;
Fig. 4 is a front view of a card connector seen from arrows IV-IV of Fig. 1;
Fig. 5 is a cross-sectional view (albeit with a cover member) showing a card connector cut along arrows V-V of Fig. 3;
Fig. 6 is a cross-sectional view (albeit with a cover member) showing a card connector cut along arrows VI-VI of Fig. 3;
Fig. 7 is a cross-sectional view (albeit with a cover member) showing a card connector cut along arrows VII-VII of Fig. 3;
Fig. 8 is a cross-sectional view showing a card connector cut along arrows VIII-VIII of Fig. 5;
Fig. 9 is a perspective view showing a first and second switching member;
Fig. 10 is a perspective view of a cover member of a card connector as seen from diagonally below;
Fig. 11 shows approximate side views of the state of elastic deformation of a first contact through the insertion of a card, Fig. 11 (a) is a diagram showing a state in which the edge of a card is making direct contact with the presser portion of a first contact, and Fig. 11 (b) is a diagram showing a state in which a first contact undergoes elastic deformation, and a contact portion makes direct contact with the flat contact of a card;
Fig. 12 shows approximate side views of the state of elastic deformation of a second contact through the insertion of a card, Fig. 12 (a) is a diagram showing a state in which the edge of a card is making direct contact with the presser portion of a second contact, and Fig. 12 (b) is a diagram showing a state in which a second contact undergoes elastic deformation, and a contact portion makes direct contact with the flat contact of a card;
Fig. 13 shows approximate side views of the states of elastic deformation of a first and a second switching member through the insertion of a card, Fig. 13 (a) is a diagram showing a state in which the edge of a card is making direct contact with a first switching member, and Fig. 13 (b) is a diagram showing a state in which a first switching member undergoes elastic deformation, and a contact portion of a first switching member makes direct contact with a contact member of a second switching member; and
Fig. 14 is a diagram, of a cover member in a state in which a card has been ejected, as seen from below.

### DESCRIPTION OF THE PREFERRED EMBODIMENTS

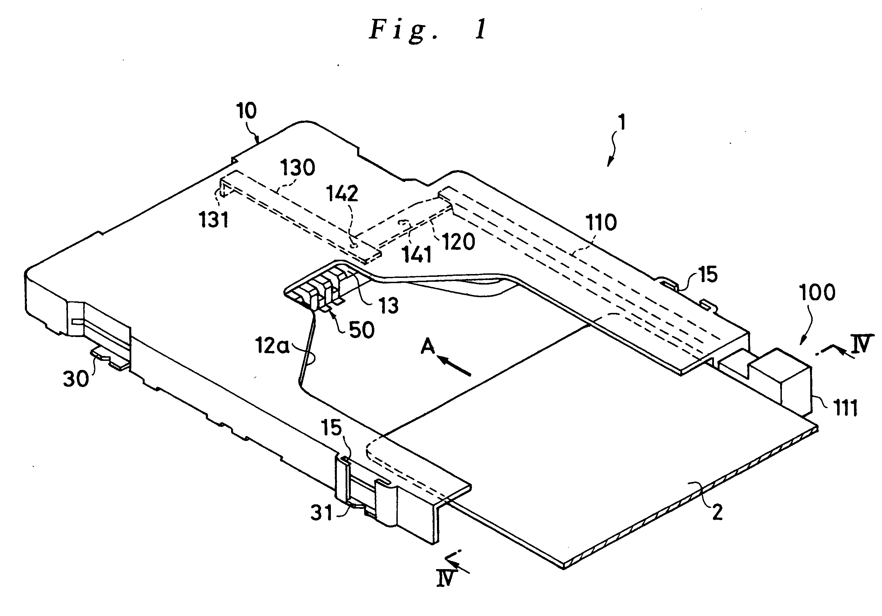

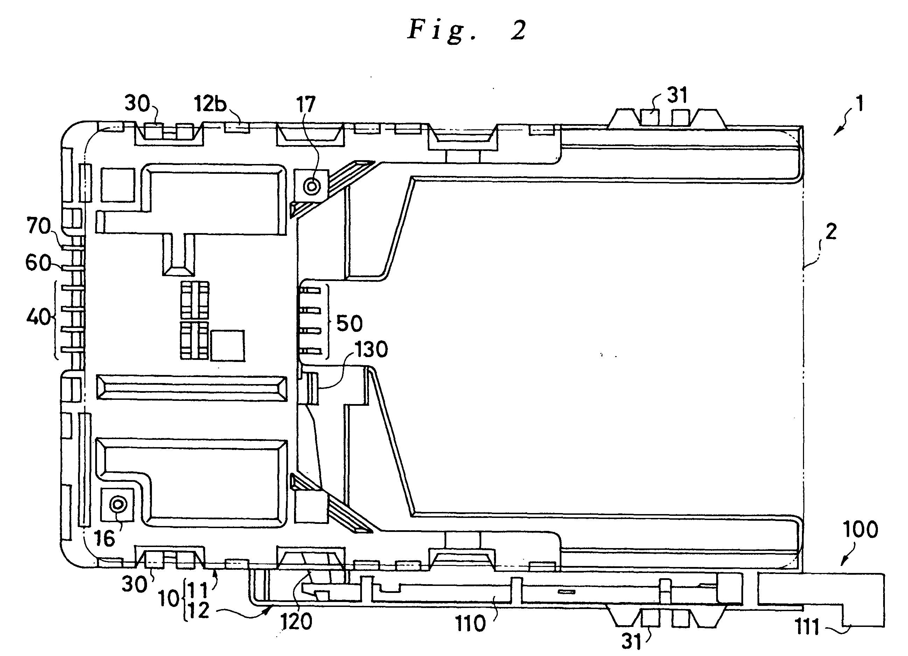

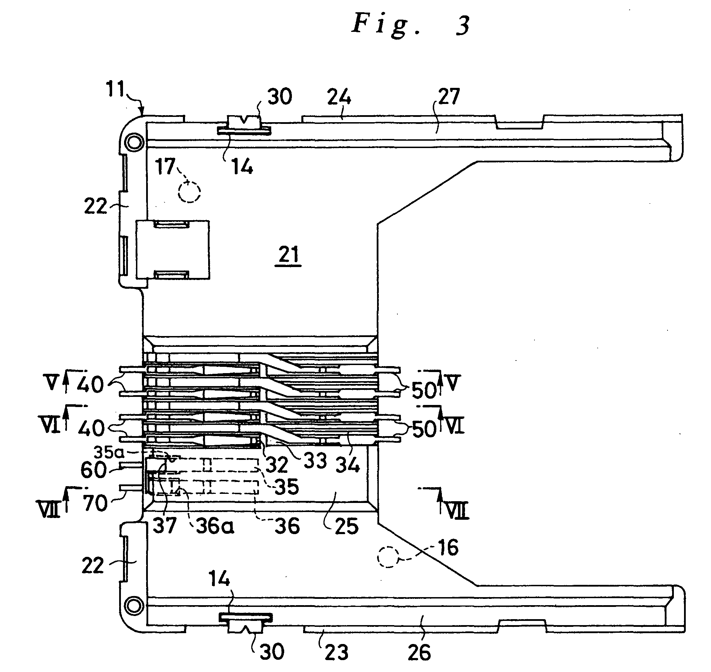

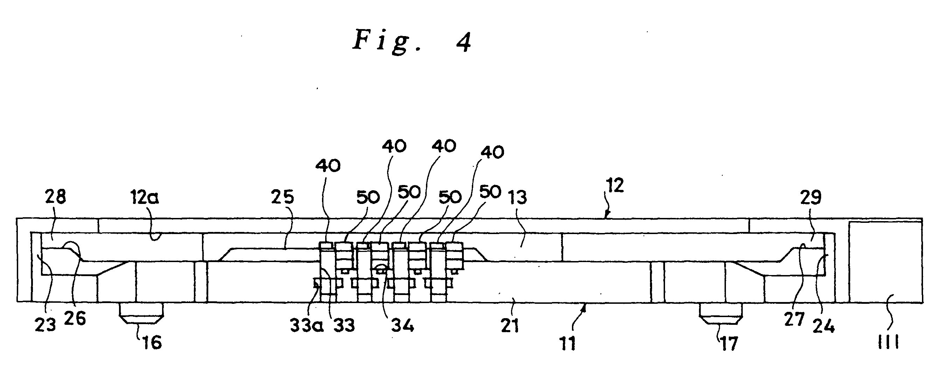

The preferred embodiments of the present invention will be explained hereinbelow by referring to the figures. Fig. 1 is a perspective view of a card ejection mechanism-equipped card connector (hereinafter referred to as a card connector) 1 according to the present invention, and also shows a card 2, which is inserted and mounted therein. Fig. 2 is a diagram of this card connector 1 as seen from below, and the two-dot chain line in the figure shows the visible outline of a card 2 when a card 2 is inserted and mounted in this card connector 1. As for the card connector 1 thereof, a first and second contact 40, 50 (a plurality of both) and a first and second switching member 60, 70 are disposed in a housing 10, and the housing 10 comprises a main unit member 11, and a cover member 12, which is mounted in a freely detachable condition on the top thereof. Further, in the cover member 12, as will be explained in detail hereinbelow, a card ejection mechanism 100 is provided. Hereinbelow, for the sake of clarification, the direction of insertion of a card 2 (the direction of the A arrow in Fig. 1) will be defined as the fore-aft direction of the card connector 1, and the direction of the width of the card 2 will be defined as the left-right direction thereof. Furthermore, the base side of arrow A is the front side, and the tip side of arrow A is the back side.

The main unit member 11 of the housing 10, as shown in Fig. 3, has a bottom wall 21, a rear wall 22, which is formed by extending upwardly from the rear end of this bottom wall 21, and left and right side walls 23, 24, which are formed by extending upwardly from the left and right ends of the bottom wall 21. These bottom wall 21, rear wall 22 and side walls 23, 24 and cover member 12 form the receiving space 13 of a card 2 (albeit the center of the rear wall 22 is open), and the open part of the front side of this receiving space 13 constitutes a card 2 insertion opening.

As shown in Fig. 4 as well, in practically nearly center portion and left-right side portions (inner side of the side walls 23, 24) of the bottom wall 21, there are formed a central platform-shaped portion 25 and left-right side platform-shaped portions 26, 27, which protrude upwardly, and which have upper surfaces that are separated by a predetermined space from the bottom surface 12a of the cover member 12. A card 2 is inserted between the central platform-shaped portion 25, side platform-shaped portions 26, 27 and bottom surface 12a of the cover member 12 inside the receiving space 13, and each upper surface of the side platform-shaped portions 26, 27 and the bottom surface 12a of the cover member 12 form guide grooves 28, 29 for smoothly inserting a card 2. Further, as shown in Fig. 3, fix-fitting mounting grooves 14, 14 are disposed in the left-right side walls 23, 24, and fix-fittings 30, 30 are mounted to these fix-fitting mounting grooves 14, 14, respectively. Furthermore, positioning lugs 16, 17, which protrude downwardly are disposed at the left front side and right rear side of the bottom surface of the bottom wall 21 (refer also to Fig. 2), and these fix-fittings 30, 30 and positioning lugs 16, 17 are used when mounting a card connector 1 to a base (will be explained hereinbelow).

In the central platform-shaped portion 25, as shown in Fig. 3, there is disposed a first groove 32 (4 locations) for mounting 4 first contacts 40, and a second groove 33 (4 locations) and third groove 34 (4 locations) for mounting 4 second contacts 50, each extending in the fore-aft direction, and lined up parallel to one another. The first groove 32 is positioned on the rear half of the central platform-shaped portion 25, and, in addition, the second groove 33 is positioned on the front half of the central platform-shaped portion 25, and both grooves 32, 33 are disposed lined up in the fore-aft direction mutually coinciding with a central axis. Further, the third groove 34 is positioned on the right side (in Fig. 3, the top side of the paper) of the two grooves 32, 33 lined up fore and aft. Furthermore, on the rear left side of the central platform-shaped portion 25, a first space 35 and a second space 36 for mounting a first switching member 60 and a second switching member 70 in the central platform-shaped portion 25 are disposed extending in the fore-aft direction.

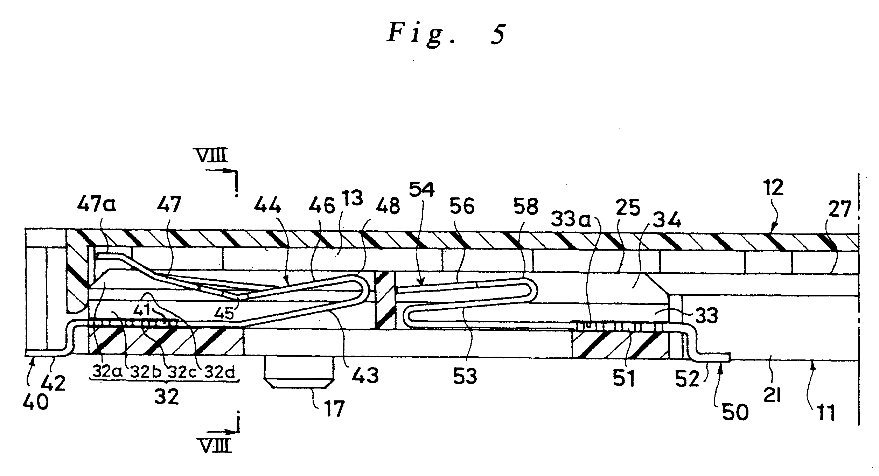

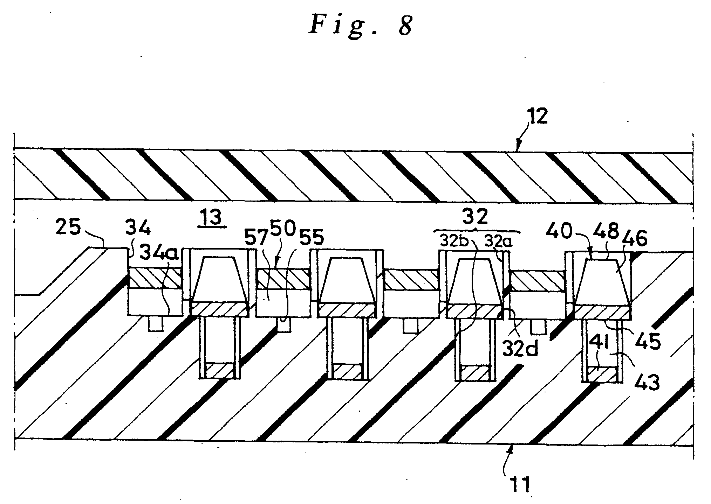

The first groove 32, as shown in Fig. 5 and Fig. 8, is constituted having an upper level groove 32a, and a lower level groove 32b, which is positioned below this upper level groove 32a, and which is narrower than the upper level groove 32a, and in the bottom portion of the lower level groove 32b (albeit only in one portion of the rear end side), there is disposed a first contact mounting groove 32c, which is formed so as to be wider than this lower level groove 32b. Further, the second groove 33, as shown in Fig. 5, has the same depth as the lower level groove 32b of the first groove 32, and in the lower portion thereof (albeit only in one portion of the front end side), there is disposed a second contact mounting groove 33a, which is formed so as to be wider than the second groove 33 (refer to Fig. 4). Further, the third groove 34 has the same depth as the upper level groove 32a of the first groove 32.

The first contact 40, as shown in Fig. 5, is constituted having a fixed portion 41, which is press fitted and fastened to a first contact mounting groove 32c; a lead portion 42, which bends rearwardly and downwardly from the fixed portion 41, and extends to the back side of the bottom wall 21; a linking portion 43, which is formed extending diagonally forwardly and upwardly from the fixed portion 41; and a V-shaped arm portion 44, which connects to this linking portion 43. Furthermore, this V-shaped arm portion 44 comprises a first arm portion 46 extending diagonally forwardly and upwardly from a base portion 45; a second arm portion 47 extending diagonally rearwardly and upwardly from the above-mentioned base portion 45; and a contact portion 48, which is formed at the tip of the first arm portion 46, is connected to the above-mentioned linking portion 43 (the second arm portion 47 is positioned above the fixed portion 41).

As shown in Fig. 8, the fixed portion 41 and the lower portion of the linking portion 43 of this first contact 40 are housed in the lower level groove 32b, and the upper portion of the linking portion 43 and the V-shaped arm portion 44 are housed in the upper level groove 32a, respectively. Here, the parts of the first contact 40 upwards from the fixed portion 41 are freely elastically deformable, the width of the base portion 45 is formed so as to be narrower than the width of the upper level groove 32a, but wider than the width of the lower level groove 32b, and makes direct contact with the bottom surface 32d of the upper level groove 32a, constraining displacement in the downward direction. Further, the contact portion 48 is positioned lower than the receiving space 13, and a presser portion 47a, which is formed by the tip portion of the second arm portion 47 being bent almost horizontally, is positioned inside the receiving space 13.

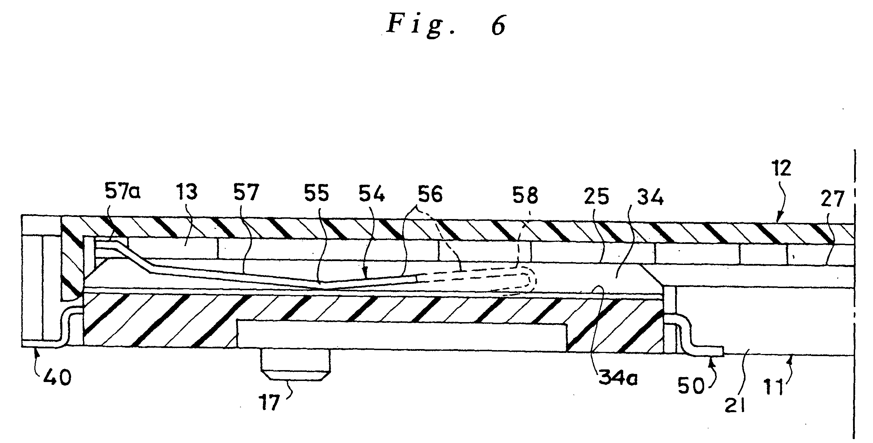

The second contact 50, as shown in Fig. 5 and Fig. 6, is constituted having a fixed portion 51, which is press fitted and fastened to a second contact mounting groove 33a; a lead portion 52, which bends forwardly and downwardly from the fixed portion 51, and extends to the front side of the bottom wall 21; a linking portion 53, which is formed folding back extending rearwardly, and extending diagonally further forwardly and upwardly from the fixed portion 51; and a V-shaped arm portion 54, which connects to this linking portion 53. Furthermore, this V-shaped arm portion 54 comprises a first arm portion 56 extending diagonally forwardly and upwardly from a base portion 55; a second arm portion 57 extending diagonally rearwardly and upwardly from the above-mentioned base portion 55; and a contact portion 58, which is formed at the tip of the first arm portion 56, is connected to the above-mentioned linking portion 53 (the first arm portion 56 is positioned to the rear and above the fixed portion 51).

As shown in Fig. 3 and Fig. 4, the first arm portion 56 of the V-shaped arm portion 54 of this second contact 50 extends bending to the right side toward the base portion 55 from the contact portion 58 (bending to the top side of the paper in Fig. 3). Thus, the fixed portion 51 and linking portion 53 of the second contact 50 are housed in the second groove 33, the first arm portion 56 spans the second groove 33 and the third groove 34, and the base portion 55 and second arm portion 57 are housed in the third groove 34, respectively. Here, as for the second contact 50, the parts upwards from the fixed portion 51 are freely elastically deformable, and the base portion 55 makes direct contact with the bottom surface 34a of the third groove 34, constraining downward displacement. Further, the contact portion 58 is positioned below the receiving space 13, and a presser portion 57a, which is formed by the tip portion of the second arm portion 57 being bent practically horizontally, is positioned inside the receiving space 13.

Thus, the contact portion 58 and fixed portion 51 of the second contact 50 are disposed so as to be positioned forward of the contact portion 48 and fixed portion 41 of the first contact 40, and, in addition, because the first arm portion 56 of the second contact 50 is bent to the right side, and the second arm portion 47 of the first contact 40 and the second arm portion 57 of the second contact 50 are disposed parallel to one another and lined up alternately in the left-right direction, the contact portion 48 of the first contact 40 and the contact portion 58 of the second contact 50 can be disposed lined up in the fore-aft direction, and at the same time, the presser portions 47a, 57a of both contacts 40, 50 can be disposed lined up in the left-right direction (refer to Fig. 3).

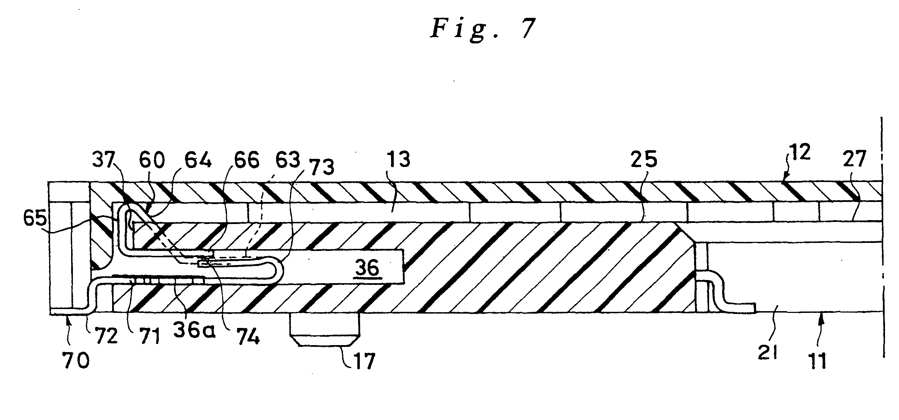

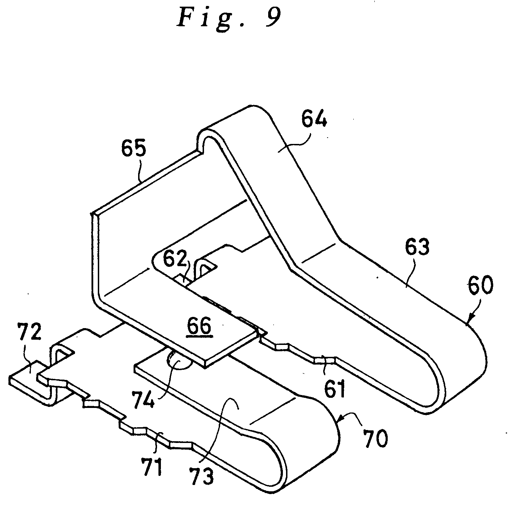

The first switching member 60, as shown in Fig. 3 and Fig. 7, is disposed so as to span the first space 35 and the second space 36, and as also shown in Fig. 9 (the main unit member 11 of the housing 10 is omitted in Fig. 9), has a fixed portion 61, which is press fitted and fastened to a first switching member mounting groove 35a formed in the lower portion of the first space 35; a lead portion 62 extending to the back side of the bottom wall 21 by bending rearwardly and downwardly from the fixed portion 61; a first arm portion 63, which extends horizontally forwardly from the fixed portion 61, and, in addition, folds back to the upper side and extends horizontally rearwardly; a second arm portion 64, which is formed extending diagonally rearwardly and upwardly from the rear end of the first arm portion 63; a third arm portion 65, which is formed extending to the lower side from the top end of the second arm portion 64, and, in addition, extending to the left side (second switching member 70 side); and a contact portion 66, which is formed extending horizontally forwardly from the bottom end of a part extending to the left side of the third arm portion 65. Furthermore, a notch 37, which opens upwardly, is disposed in the rear portion of the first space 35 and second space 36, the second arm portion 64 protrudes upwardly from this notch 37 and is positioned inside the receiving space 13, and the contact portion 66 is positioned inside the second space 36.

The second switching member 70, as shown in Fig. 3 and Fig. 7, is disposed inside the second space 36, and has a fixed portion 71, which is press fitted and fastened to a second switching member mounting groove 36a formed in the lower portion of the second space 36; a lead portion 72 extending to the back side of the bottom wall 21 by bending rearwardly and downwardly from the fixed portion 71; an arm portion 73, which extends horizontally forwardly from the fixed portion 71, and, in addition, folds back to the upper side and extends horizontally rearwardly; and a contact portion 74, which is protrudingly formed on the upper surface of this arm portion 73 as a protrusion. Furthermore, the contact portion 74 of the second switching member 70 is positioned below the contact portion 66 of the first switching member 60.

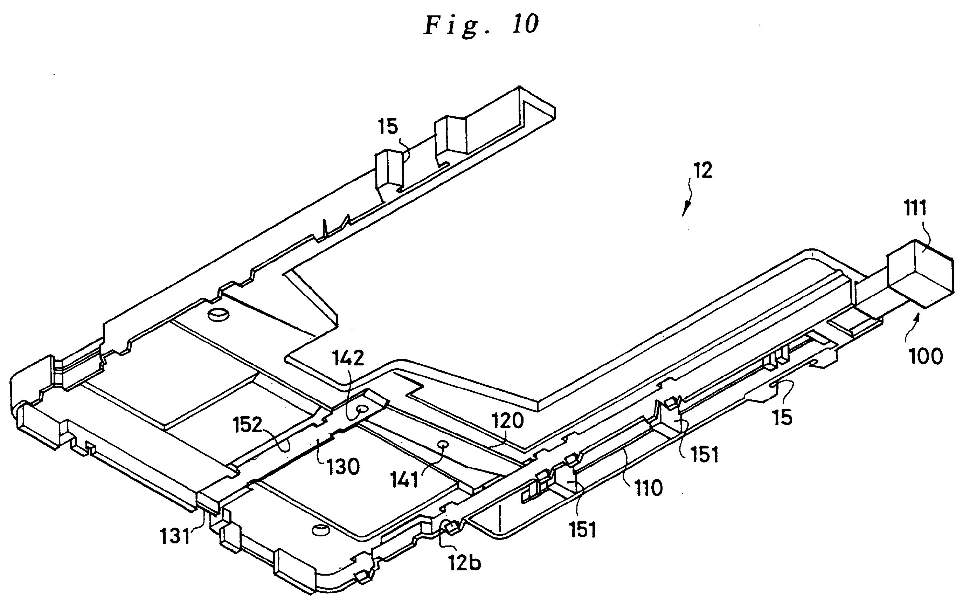

Fig. 10 is a diagram of the cover member 12 of the housing 10 as seen from diagonally below. The cover member 12 is formed in a shape, which opens downwardly, and a plurality of claws 12b, which protrude inwardly, are disposed on the right and left sides thereof. When the upper side of the main unit member 11 of the housing 10 is covered by this cover member 12, the above-mentioned plurality of claws 12b are constituted so as to latch onto the left and right side walls 23, 24 of the main unit member 11, and, as a result, it becomes possible for the cover member 12 to be mounted to the main unit member 11 (refer to Fig. 2). Further, fix-fitting mounting grooves 15, 15 are disposed in the left and right sides of the cover member 12, and fix-fittings 31, 31 are mounted to these fix-fitting mounting grooves 15, 15, respectively (refer to Fig. 1 and Fig. 2 regarding the fix-fittings 31, 31).

Further, as explained hereinabove, a card ejection mechanism 100 is mounted to the cover member 12. The card ejection mechanism 100, as shown in Fig. 10, is constituted having a presser member 110, a lever member 120, and a card extraction member 130. The presser member 110 is held in a holding portion 151 formed on the right side of the cover member 12, sliding freely in the fore-aft direction, and a presser portion 111 is formed by the front end portion thereof protruding forwardly of the right front end portion of the cover member 12. The lever member 120 is mounted in a freely oscillating condition around a pin 141 fastened to the cover member 12, and the one end side thereof latches onto the rear end portion of the presser member 110. The card extraction member 130 is held in a holding groove 152 disposed in the cover member 12, sliding freely in the fore-aft direction, and the front end portion thereof is connected in a swinging condition via a pin 142 to the other end side of the lever member 120. Further, the rear end portion of the card extraction member 130 bends downwardly, forming a card extracting claw 131, and this card extracting claw 131 is on the right side of the central platform-shaped portion 25 in the main unit member 11 (the top side of the paper of the central platform-shaped portion 25 in Fig. 3), positioned in the opening portion of the center of the rear wall 22.

Positioning of the card connector 1, constituted in this way, is performed by mating the above-mentioned positioning lugs 16, 17 to holes disposed in the base (not shown in the figure), and the lead portions 42, 52 of both contacts 40, 50, and the lead portions 62, 72 of both switching members 60, 70 are surface mounted to a terminal pattern on the base, and, in addition, the fix-fittings 30, 30 mounted to the main unit member 11 of the housing 10, and the fix-fittings 31, 31 mounted to the cover member 12 are mounted on the base.

An IC chip is embedded on the inside of the card 2, and a flat contact, which is linked to this IC chip, is disposed on the back surface of the card 2. To mount this card 2 in the card connector 1, the card 2 is inserted in the direction of arrow A from an insertion opening formed in the front side of the housing 10 as shown in Fig. 1. The constitution is such that the card 2 is guided by the above-mentioned guide grooves 28, 29 formed in the housing 10, being smoothly guided inside the receiving space 13.

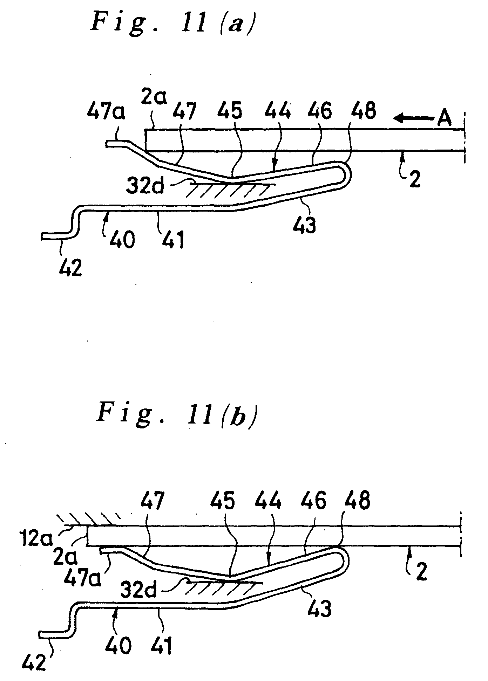

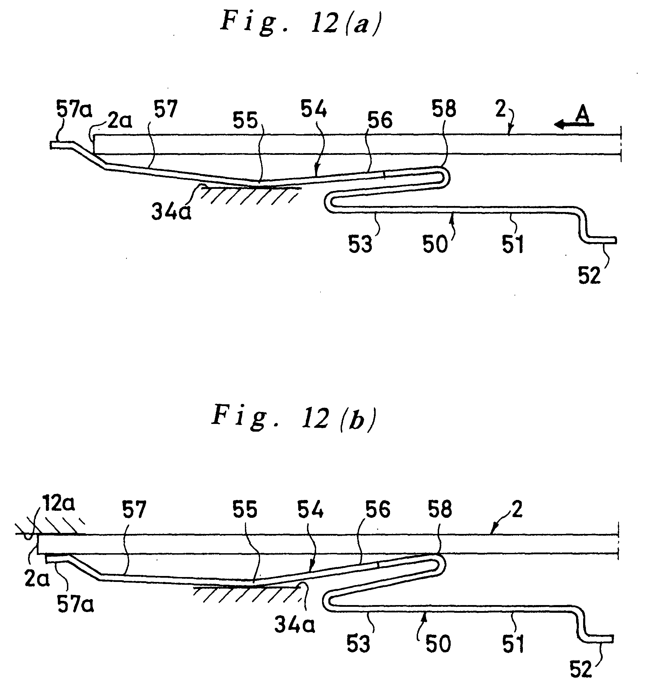

When a card 2 is inserted into the receiving space 13, the front end portion (rear end portion) 2a of the card 2 makes direct contact with presser portions 47a, 57a of the first and second contacts 40, 50 (refer to Fig. 11 (a), Fig. 12 (a)), pushing (pressing) these downwardly. As a result, because the V-shaped arm portions 44, 54 of both contacts 40, 50 are oscillated having the base portions 45, 55 as fulcrums, and the contact portions 48, 48 are pushed upwardly, both contact portions 48, 58 come into direct contact with the flat contact of the card 2 (refer to Fig. 11 (b), Fig. 12 (b)). Furthermore, since the card 2 will move slightly rearwardly, as a result of being pushed in, even after the flat contact makes direct contact with the contact portions 48, 58, a wiping action results between the two contacts, and poor contact is prevented.

Further, in a state, wherein a card 2 is inserted and mounted inside the receiving space 13, because it is a state in which the first and second contacts 40, 50 are forcibly elastically deformed by the card 2, the presser portions 47a, 57a push upwardly on the tip portion 2a of the card 2, pressing same against the bottom surface 12a of the cover member 12 of the housing 10. For this reason, the tip portion 2a of the card 2 is held so as to be sandwiched by the presser portions 47a, 57a of the two contacts 40, 50 and the bottom surface 12a of the cover member 12 (refer to Fig. 11 (b), Fig. 12 (b)). As a result, the card 2 is securely held inside the receiving space 13.

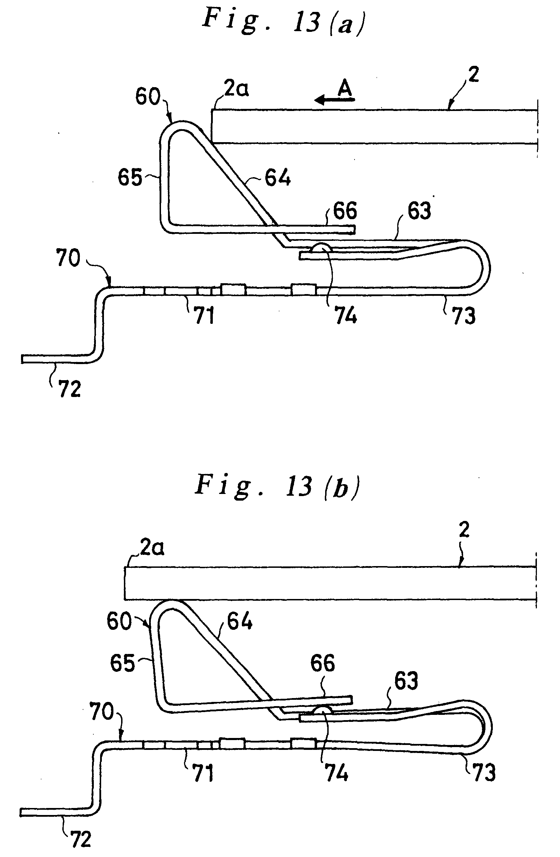

Further, when a card 2 is inserted inside the receiving space 13, the tip portion 2a of the card 2 makes direct contact with the second arm portion 64 of the first switching member 60 (refer to Fig. 13 (a)), pushing this downwardly. Consequently, the first switching member 60 is elastically deformed, and the contact portion 66 moves downwardly, making direct contact with the contact portion 74 of the second switching member 70 (refer to Fig. 13 (b)). Thus, in a state, wherein a card 2 is inserted and mounted in the receiving space 13, the two switching members 60, 70 are electrically connected, power is turned ON, and it becomes possible for the card 2 and card connector 1 to exchange information by way of the direct contact portions of the flat contact and the first and second contacts 40, 50.

When a card 2 is mounted in a card connector 1 in this way, because the tip portion of the card 2 pushes the card extracting claw 131 of the card extraction member 130 rearwardly, the card extraction member 130 is made to slide rearwardly inside the holding groove 152, and, as a result, the lever member 120 is oscillated around the pin 141, sliding the presser member 110 forward. Consequently, the presser portion 111 of the presser member 110 moves the right side front end portion of the cover member 12 forward.

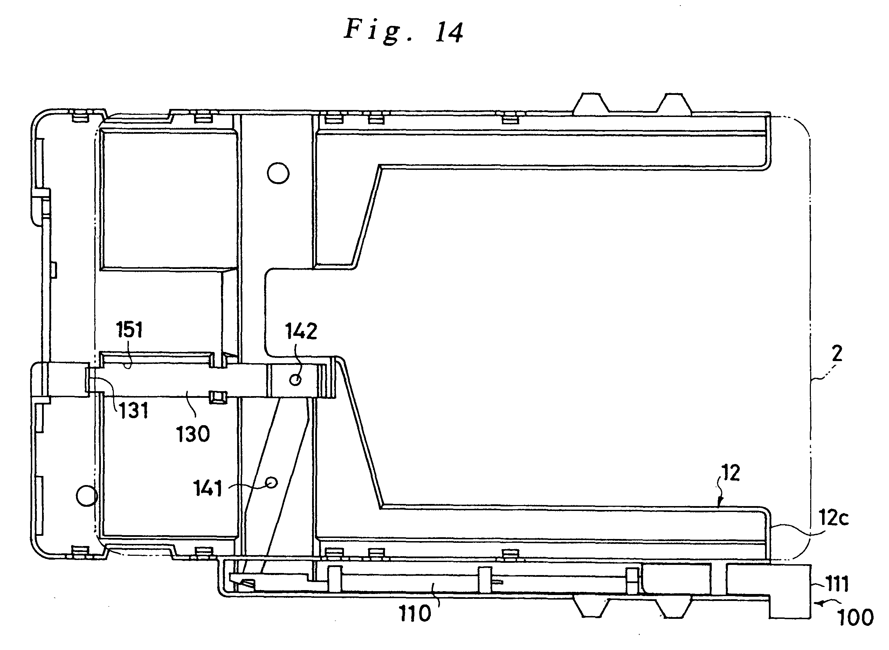

When a card 2 is ejected, the presser portion 111 is pressed rearwardly. As a result, the presser member 110 slides rearwardly, the lever member 120 oscillates around the pin 141, and the card extraction member 130 is made to slide forward. At this time, the card extracting claw 131 of the card extraction member 130 is extracted toward the front in a state in which the tip portion of the card 2 is caught. As a result, the card 2 is forcibly ejected. Fig. 14 shows a state, wherein a card 2 is ejected in this way, and is a diagram of only the cover member 12 as seen from below. Furthermore, the two-dot chain line shown in the figure is the visible outline of a card 2, which has been ejected by this card ejection mechanism 100.

When a card 2 is ejected from a card connector 1 in this way, both contacts 40, 50 and both switching members 60, 70 are released from a forcibly elastically deformed state, and return to a state prior to insertion of card 2. That is, both contact portions 48, 58 are positioned lower than the receiving space 13, and both presser portions 47a, 57a are positioned inside the receiving space 13. Further, the two contact portions 66, 74 of the first and second switching members 60, 70 are separated, and the power is turned OFF.

Thus, in a card ejection mechanism-equipped card connector 1 according to the present invention, a card ejection mechanism 100, for ejecting a card 2 held in the receiving space of the housing 10, is disposed in a freely detachable cover member 12 on a main unit member 11 of the housing 10, and with a constitution of this kind, since an existing card connector can be used as-is without making engineering changes to parts other than the cover member (that is, the main components of a card connector), and there is no need to redesign the card connector itself, manufacturing costs can be reduced. Further, since it is not a constitution in which this card ejection mechanism 100 is separately attached to an existing card connector, the increase in the number of component parts can be lessened, and the increase in size can also be minimized. Further, with a constitution like this, a variety of types of card ejection mechanism-equipped card connectors can be realized by replacing only the card ejection mechanism-equipped cover member.

Embodiments of a card ejection mechanism-equipped card connector according to the present invention have been explained thus far, but the scope of the present invention is not limited to or by the above, and various engineering changes are possible. For example, in the present invention, a card ejection mechanism for ejecting a card held in a receiving space of a housing can be disposed in a cover member of the housing, and the constitution of the card ejection mechanism does not particularly matter. Further, the card ejection mechanism thereof is not limited to a manual ejection system such as that above, and can also be constructed such that ejection is performed using electricity or some other motive power.

As explained hereinabove, in a card ejection mechanism-equipped card connector according to the present invention, because a card ejection mechanism for ejecting a card held in a receiving space of a housing is disposed in a freely detachable cover member on a main unit member of the housing, this card connector can be used as-is without making engineering changes to parts, in an existing card connector other than the cover member (that is, the main components of a card connector), and because there is no need to redesign the card connector itself, manufacturing costs can be reduced. Further, since this is not a constitution in which this card ejection mechanism 100 is separately attached to an existing card connector, the increase in the number of component parts can be lessened, and the increase in size can also be minimized. Further, with a constitution such as this, a variety of types of card ejection mechanism-equipped card connectors can be realized by replacing only a card ejection mechanism-equipped cover member.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

### RELATED APPLICATIONS

This application claims the priority of Japanese Patent Application No.2000 - 089126 filed on March 28, 2000, which is incorporated herein by reference.

## Claims

1. A card ejection mechanism-equipped card connector, comprising:
a housing in which a receiving space for receiving and holding a card is formed;
a contact, which is mounted in said housing, and which makes direct contact with a card contact portion disposed on said card held in said receiving space; and
a card ejection mechanism for ejecting said card held in said receiving space,
wherein said housing comprises a main unit member in which said contact is mounted, and a cover member, which is mounted in a freely detachable condition to this main unit member, and
said card ejection mechanism is disposed in said cover member.

2. The card connector according to claim 1, wherein said main unit member comprises a bottom wall, a rear wall, which is formed by extending upwardly from the rear end of this bottom wall, and left and right side walls, which are formed by extending upwardly from the left and right ends of this bottom wall, said receiving space is formed by enclosing the bottom wall, rear wall, and side walls thereof with said cover member, the front side of said bottom wall is open, and an insertion opening of said card is formed in the front of said receiving space.

3. The card connector according to claim 2, wherein a central platform-shaped portion and left-right side platform-shaped portions, which protrude upwardly, and which have upper surfaces that are separated by a predetermined space from the bottom surface of said cover member, are formed practically in the center portion of said bottom wall and on the inner side of said side walls, and said card is inserted inside said receiving space and between said central platform-shaped portion and said left-right side platform-shaped portions and the bottom surface of said cover member, and a guide groove for when said card is inserted is formed by each upper surface of said left-right side platform-shaped portions and the bottom surface of said cover member.

4. The card connector according to claim 2, wherein the constitution is such that a first fix-fitting is mounted on the outer surface of said left-right side walls, respectively, and these first fix-fittings are surface mounted to a base, fastening said main unit member to said base.

5. The card connector according to claim 2, wherein a plurality of contact mounting grooves are each disposed on said central platform-shaped portion extending in the fore-aft direction, and lined up parallel to one another, and said contact is mounted to said main unit member by being press fitted to the inside of said contact mounting grooves.

6. The card connector according to claim 1, wherein the constitution is such that said cover member is formed in a downwardly opening shape, and a plurality of inwardly protruding claws, which are disposed on the left-right sides of said cover member, latch onto said left-right side walls of said main unit member, mounting said cover member onto said main unit member.

7. The card connector according to claim 2, wherein a second fix-fitting is mounted to the left-right sides of said cover member, and these second fix-fittings are surface mounted to a base, fastening said cover member to said base.

8. The card connector according to claim 1, wherein said card ejection mechanism comprises a presser member, a lever member and a card extraction member,
wherein said presser member is mounted on the right side of said cover member so as to slide freely in the fore-aft direction, and the front end portion of said presser member having a presser portion, which protrudes forwardly of the side front end portion of said cover member,
said lever member is mounted in a freely oscillating condition to said cover member, and the one end side of said lever member latches onto the rear end portion of said presser member, and
said card extraction member is mounted to said cover member so as to slide freely in the fore-aft direction, the front end portion of said card extraction member is connected in a swinging condition to the other end side of said lever member, and the rear end portion of said card extraction member bends downwardly, forming a card extracting claw.
